# EUROPEAN PATENT SPECIFICATION

(11) **EP 2 803 118 B1**
(45) Date of publication and mention of the grant of the patent: **13.04.2016**
(21) Application number: 13701866.9
(22) Date of filing: 09.01.2013
(51) Int. Cl.: H01S 3/08, H01S 3/081, H01S 3/106, H01S 3/115, H01S 3/02, H01S 3/0941, H01S 3/06

(54) **LASER RESONATOR ARCHITECTURE**
LASERRESONATORARCHITEKTUR
ARCHITECTURE DE RÉSONATEUR LASER

(30) Priority: 09.01.2012 GB 201200336
(43) Date of publication of application: 19.11.2014
(73) Proprietor: Thales Holdings UK Plc, Addlestone, Surrey KT15 2NX (GB)
(72) Inventor: BORTHWICK, Andrew, Glasgow G51 5BZ (GB); LEE, Stephen, Glasgow G51 5BZ (GB); BYRNE, Gerald, Glasgow G51 4BZ (GB)
(74) Representative: Round, Edward Mark
(86) International application number: PCT/GB2013/050026
(87) International publication number: WO 2013/104898

(56) References cited:
- WO-A1-94/23479
- US-A- 3 924 201
- US-A- 4 099 141
- US-A- 4 779 278
- US-A1- 2005 111 496

## Description

The present invention relates to a resonator arrangement for use in lasers.

### Background

There are several requirements or demands facing laser designers. For example, it is often preferred to make the laser compact and to minimise the size and weight of the laser. In addition, the laser should provide enough power for the application for which it is to be used. It is often preferred to have a high beam quality. In many applications, resilience is an important property, and the laser must be able to operate effectively whilst being subject to a wide range of disturbances to its geometry. This enables the laser to maintain its performance over a wide environmental range, e.g. so that the laser is usefully operable over a wide range of temperatures, heat fluxes and/or pressures and/or in situations where it is exposed to a high degree of vibration or shock. Not least, for the laser to be commercially viable, particularly in large volume applications, the per unit cost must be minimised and manufacturing complexity reduced.

It will be appreciated by those skilled in the art that compromises often have to be made to at least one of the desired properties in order to increase the performance of one or more of the other desired properties, with those compromises typically depending on the application for which the laser is to be used. In view of this, it is desirable to develop new laser configurations that maximise the performance of the laser with respect to the desired properties and minimise the compromises and/or provide alternative configurations that may be useful in specific applications.

There are various architectures available to the laser designer when designing a laser for a particular application. See for example US 4,779,278; US 2005/0111496A1; US 3,924,201.

One such architecture is the Fabry-Perot Oscillator. This configuration comprises a cavity formed between two opposed mirrors, one fully reflecting and the other partially reflecting. However, with this design, any misalignment of one mirror relative to the other destroys the feedback. In order to increase the stability, introducing a convergent beam in the cavity is often required. Despite this, higher resilience often comes at a price of lower beam quality for a constant resonator volume.

Another example of a commonly found architecture is the Crossed Porro resonator. This architecture comprises a cavity provided between two crossed roof prisms. Studies such as that by B.A.See et. al in "An Assessment of the Crossed Porro Prism Resonator" ERL-0162-TM Defence Science & Technology Organisation have found the Crossed Porro Resonator to be significantly more resilient than systems based on the fabry perot oscillator. However, in crossed porro resonators, the output beam must be coupled by beam splitting and careful control of the polarisation state. This results in an increase in complexity of the resonator with an associated increase in volume and cost.

The mirror-corner cube resonator is a further example of a commonly found laser resonator arrangement. In this arrangement, the fully reflecting mirror of the fabry perot resonator is replaced by an on-axis corner cube. The reflection angle of the corner cube is insensitive to alignment, making this design both resilient and simple. However, with this arrangement, it is difficult to form clean Gaussian beams and therefore, the increased resilience and simplicity comes at a cost of reduced beam quality. In addition, this architecture results in spatially varying polarisation, which makes lasers based on this architecture difficult to electro optically q-switch.

It is at least one object of at least one embodiment of the present invention to provide an improved laser architecture. It is at least one object of at least one embodiment of the present invention to eliminate or mitigate at least one problem with the prior art.

### Statements of Invention

According to a first aspect of the present invention is a laser resonator comprising:
at least one output coupler;
at least one end reflector;
a retroreflector;
a common telescope;
a gain medium;
wherein the common telescope is provided in a beam path between the retro reflector and both the end mirror and the output coupler.

The end reflector may comprise an end mirror, or a porro prism or the like.

The resonator may be configured such that a beam or radiation reflected from the output coupler passes through the telescope before being reflected by the retroreflector to the end reflector via the telescope. It will be appreciated from this that, since the beam path is reversible, a beam or radiation reflected from the end reflector may pass through the telescope before being reflected by the retroreflector to the output coupler via the telescope.

The resonator may comprise a stable resonator. The resonator may be configured to support and/or create one or more resonant modes, which may be stable resonant modes.

The resonator may be configured such that the retroreflector receives the beam or radiation from the end reflector and/or the output coupler via the telescope and reflects the beam or radiation to the other of the output coupler and/or end reflector via the telescope.

The telescope may be shared by an even number of arms or beam paths of the resonator per round trip.

It would be straightforwardly apparent to a person skilled in the art how to align optical components such as mirrors, telescopes and retroreflectors so as to have the beam travel along a desired path. However, the exact geometry for doing so will depend on a variety of factors such as the dimensions of the cavity. Therefore, recitation of or limitation to any specific geometric parameters such as angles or distances is not appropriate.

The resonator may be configured such that on every trip between the output coupler and the end reflector, the beam or radiation passes through the telescope twice. The resonator may be configured such that on every trip between the output coupler and the end mirror, the beam or radiation passes through the telescope in both a first or forward direction and a second or reverse direction.

The first or forward direction may be an expansion direction in which the beam is expanded by the telescope, e.g. the radius or beam waist of the beam is increased. The second or reverse direction may be a reduction direction in which the beam is contracted or shrunk by the telescope, e.g. the radius or beam waist of the beam is reduced.

The gain medium may be provided on the beam path between the retroreflector and the telescope.

In this way, radiation emitted from the gain medium may resonate or oscillate within a cavity such that the radiation travels through a first arm or path between the output coupler and the retro reflector via the telescope and a second arm or path between the retro reflector and the end reflector via the telescope. The gain medium may be provided on the first or second arm or path such that the radiation passes through the gain medium.

The telescope may be configured to expand the beam going through the gain medium, for example, by increasing the size of the fundamental mode, and so may improve beam quality. A common telescope is a telescope shared by at least two arms or paths of the resonator. By providing a single common telescope on both the first and second arms or paths, such that for every trip over the first and second arms of the resonator the beam passes through the telescope in opposite directions such that the expanded beam passes through the gain medium, the beam quality is further improved over a single telescope of equal power on one arm.

By providing a common telescope on both the first and second arms or paths, such that for every trip over the first and second arms of the resonator the beam passes through the telescope in opposite directions, any effect on the beam due to geometrical misalignments in or of telescope as a whole, or any of its components may be cancelled out over the round trip as the reverse effect is applied to the beam when passing through the telescope in the opposite direction.

The output coupler may be partially reflective. The end reflector may be reflective. The output coupler and the end mirror may be integrated, for example, by being provided on a common substrate. For example, a portion of a surface of the substrate facing the retroreflector may be coated with a partially reflective coating in order to form the output coupler and a portion of the surface of the substrate facing the retroreflector may be coated with a reflective coating in order to form the end mirror. By providing a common substrate for the end mirror and output coupler, as well as a common telescope on both the first and second arms or paths, any effect on the beam due to geometrical misalignments in or of orientation of the mirror common substrate may be cancelled out over the round trip as the reverse effect is applied to the beam when passing through the telescope in the opposite direction and reflecting off the adjacent mirrored surface.

The common telescope may be mounted proximate or adjacent to the end reflector / output coupler. The common telescope may comprise at least one and preferably at least two optical elements, which may comprise, for example, at least first and second optical elements. The optical elements may be or comprise lenses. The first and second optical elements may be spaced apart from each other. The first optical element (e.g. an eyepiece) may be provided closer to the end mirror and/or output coupler and further from the retroreflector than the second optical element (e.g. an objective lens), which may be provided closer to the retroreflector and further from the output coupler and/or end mirror than the first optical element. The common telescope may be configured such that radiation reflected from the retroreflector passes through the second optical element of the telescope before the first optical element, whilst radiation reflected by the end mirror or output coupler passes through the first optical element of the telescope before the second optical element.

The resonator-telescope geometry may be optimised for low boresight sensitivity to telescope focus, for example, comprising at least one of low power, long scope, small off-axis radii, and/or the like.

The first or second optical elements may be mounted on a spindle, preferably the spindle may extend along the optical axes of the first and second optical elements, i.e. they may be mounted on-axis. The laser resonator may be operable such that the optical axes of the telescope is not used, i.e. it may be configured such that the beam and/or radiation does not pass through the optical axes of the optical elements, which may allow the first and second optical elements of the telescope to be mounted on axis, which may advantageously provide a simple and naturally balanced mounting, and that facilitates separation adjustment for focus control.

The first or second optical elements may be mounted within a tube or enclosure coaxial to the optical axis of the 1^{st} and 2^{nd} elements. This may allow the resonator to use beam paths close to one or both optical elements optical axis, which may advantageously reduce the resonator sensitivity to focus stability.

The resonator may use a combination of mounting methods described above, which may be of use for high power telescopes where a spindle mount is appropriate for the 2^{nd} optical element due to the large beam offset from the telescope optical axis, and an enclosure mount for the primary element where the beam is close to the telescope optical axis. The spindle & enclosure may be the same component, with holes to allow the beam to pass from the 1^{st} element to the 2^{nd} element.

Furthermore, the above arrangements may result in the first and second optical elements being used only in one plane, which may allow the first and/or second optical elements to be trimmed, for example into rectangular shapes, in order to reduce the weight and volume of the system.

The telescope may comprise focus adjustment means. The telescope may comprise separation adjustment means for selectively varying the separation of the first and second optical elements. For example, separation adjustment means may comprise a spindle adjuster for varying the length of the spindle and/or moving a portion of the spindle to which the first optical element is mounted relative to a portion of the spindle to which the second optical element is mounted. The separation adjustment means may comprise a lock or clamp for selectively or releasably fixing the separation of the first and second optical elements. In this way, the focus of the telescope may be varied / variable, for example during initial alignment.

The telescope may be configured to be defocused. The telescope may be configured to introduce convergence in the cavity, which may improve laser stability. The telescope may be configured to introduce either local divergence or convergence within the cavity, which may compensate for a thermal lens within the gain medium.

The telescope focus may be actively or passively athermalised. Many suitable methods for doing this are available to those skilled in the art. For example, the rate of change of index of refraction with temperature of the 1^{st} & 2^{nd} elements may be selected to provide compensation for the change of focus of the telescope as a whole. Alternatively or additionally, the mechanical components of the telescope, such as the spindle, may exhibit a low thermal expansion, or a thermal expansion that compensates for the change in focus of the optical elements. Where no such material exists, one optical element may be mounted on a re-entrant mount of higher thermal expansion than the material between the 1^{st} & 2^{nd} element. An example of a re-entrant mount is described in "Introduction to opto-mechanical design" Daniel Vukobratovich, National Optical Astronomy Observatories, 950 Cherry Ave Tucson AZ 85726-6732, which is hereby incorporated by reference, in which the re-entrant mount is described as a "bi-metallic compensator", although it will be appreciated that the re-entrant mount need not be metallic. Careful selection of the length of re-entrant mount may be used to achieve an effective thermal expansion rate between the two optical elements that achieves focus athermalisation. By choosing a small differential in thermal expansion between the re-entrant mount and the connecting material, the athermalised solution may be made insensitive to separation adjustment. Alternately to the passive solutions summarised above, one or other optical element may be located in an actuator driven stage to provide active athermalisation.

The telescope may exhibit low off-axis aberrations. This may be beneficial to optimise the resonators resilience with respect to decentre of the retroreflector's axis of symmetry and the common telescope's optical axis. Many methods are known in the art, for example the use of aspheric lenses.

Alternately, the telescope may exploit off axis aberrations to achieve round trip stability yet such aberrations are not necessarily balanced on a single pass. This may allow relatively inexpensive spherical optics to be used. Additionally, this extends the effective round trip length of the telescope, which may reduce the sensitivity to focus. As is known in the art, a retroreflector reflects the beam or radiation back at the same angle but opposite direction to the incident beam or radiation over a range of incident angles, i.e. the radiation is reflected back along a direction of travel that is parallel but opposite to that of the incident radiation. In a particular example, the retroreflector may comprise a corner cube retroreflector. The retroreflector may be arranged to be off-axis, i.e. the beams are not received or reflected along the axis of symmetry of the retroreflector. The axis of symmetry of the retroreflector may be collinear with the optical axis of the common telescope. This may be beneficial to optimise the resonators resilience with respect to off-axis optical aberration of the common telescope.

The resonator may be operated or operable as a continuous wave laser. The resonator may be operated or operable as a modelocked laser.

In a specific example, the resonator may comprise a q-switch. This may be advantageous, as both the end mirrors are imaged to a further plane by the telescope. This reduces the solid angle available for reflections during the high-Q pump period, thus reducing ASE losses and increasing beam power.

The laser resonator may comprise a radiation source, which may be configured to pump the gain medium, and preferably end pump the gain medium, for example, via a polariser beam splitter. The polarised beam splitter may be used in conjunction with a Pockels Cell to allow operation as a Q-switch in an exemplary embodiment of a Q-switched laser resonator.

The resonator may comprise or incorporate an alignment adjustment element. When defocused, the resonant angle between the two arms is no longer parallel. By providing or incorporating an alignment adjustment element within the resonator, the correct angle for resonance may be obtained, allowing operation at a fixed defocus of the telescope.

The alignment adjustment element may be fixed, such as an optical wedge. A fixed wedge may be realised as a discrete component, or a deliberate adjustment to an existing one such as the retroreflector or rod.

The alignment adjustment element may comprise an alignment adjustment mechanism, such as a paired set of rotating wedges. The alignment adjustment mechanism may be provided in an arm or path of the resonator, which may be a different arm and/or path to the gain medium, although it will be appreciated that both the gain medium and alignment adjustment mechanism could be provided on the same arm or path if required. The alignment adjustment mechanism may be operable, for example by the relative rotation of the paired wedges, to provide adjustment of the resonator alignment, e.g. in order to compensate for focus adjust on the telescope and/or any residual wedges on components due to manufacturing tolerances.

The arrangement described above provides a simple design that is inherently resilient to misalignment of both the retroreflector, end reflector substrate and the telescope but may retain a guassian beam and high beam quality.

The laser resonator may be configured so as to have no phase conjugate reflections / mirrors. The laser resonator may be configured to have no intermediate mirrors of any type between passes of the gain medium and the at least one output coupler and/or at least one end reflector.

The laser resonator and/or telescope may have a magnification greater than unity. The telescope may have a low numerical aperture. The laser resonator may be configured such that the light beam makes one pass of the gain medium before exiting the resonator.

According to a second aspect of the invention is a laser comprising the laser resonator according to the first aspect.

According to a third aspect is an apparatus comprising a laser according to the second aspect.

According to a fourth aspect of the present invention is a method of operating a laser resonator of the first aspect and/or a laser of the second aspect and/or an apparatus according to the third aspect.

It will be appreciated that features analogous to those described in relation to any of the above aspects may be applicable to any of the other aspects,

Method features corresponding to use of any features described above in relation to apparatus and/or apparatus features configured to implement any features described above in relation to a method are also contemplated as falling within the scope of the present invention.

### Brief Description of the Drawings

The invention will be described herein with respect to the following drawings:
Figure 1 shows a simplified schematic of a laser resonator;
Figure 2 shows an exemplary detailed schematic of the laser resonator shown in Figure 1;
Figure 3 shows an example of a telescope using a re-entrant mount;
Figure 4 shows the effect of misalignment of the output coupler / end mirror on a comparison resonator;
Figure 5 shows the effect of misalignment of the output coupler / end mirror on the laser resonator of Figures 1 or 2;
Figure 6 shows the effect of decentring of one of the lenses 55a, 55b of the telescope on a comparison resonator; and
Figure 7 shows the effect of decentring of one of the lenses 55a, 55b of the telescope on the laser resonator of Figures 1 or 2.

### Detailed Description of the Drawings

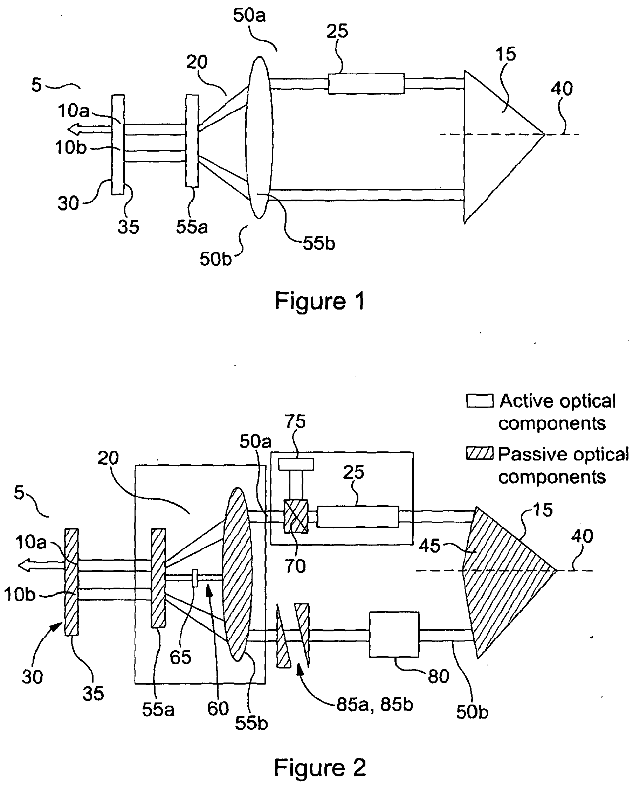

Figure 1 is a simplified schematic that shows the basic components of a resonator 5 for a laser. A more detailed schematic of a possible q-switched resonator 5 is shown in Figure 2. The resonator 5 comprises an integrated output coupler 10a / end mirror 10b disposed opposite a retroreflector 15. A telescope 20 is provided proximate the integrated output coupler 10a / end mirror 10b and a gain medium 25 is provided in an expanded beam path between the output coupler 10a and the retroreflector 15 between the retroreflector 15 and the telescope 20.

In this embodiment, the integrated output coupler 10a / end mirror 10b functions both as an end mirror 10a and an output coupler 10b. In particular, the integrated output coupler 10a / end mirror 10b comprises a common substrate 30, wherein a part of an internal surface 35 of the substrate 30 that faces the retroreflector 15 is coated with a partially reflective coating that functions as the output coupler 10a and another part of the internal surface 35 of the common substrate 30 is coated with a reflective surface that acts as the end mirror 10b.

The retroreflector 15 comprises an off axis corner cube retroreflector configured to reflect an incident beam such that the reflected beam is parallel to the incident beam but opposite in direction. Since the corner cube 15 is off axis, it is positioned such that it receives the beam and reflects the beam along vectors that are not co-incident with a symmetry axis 40 of the corner cube 15. The symmetry axis of the corner cube is collinear with the optical axis of the common telescope.

In an optional embodiment, such as that shown in Figure 2, the corner cube 15 is provided with an additional fixed wedge 45, in this example integrally provided with or engineered into the corner cube 15. This arrangement advantageously allows the telescope 20 to be purposefully defocused by a fixed amount, e.g. to improve laser stability. This reduces the range of adjustment for resonator alignment and so facilitates greater finesse in alignment adjustment. The fixed defocussing of the telescope 20 is compensated by the fixed wedge 45 built into the corner cube 15.

The corner cube 15 is configured to have a zero phase shift, for example, by providing the cube with a suitable coating (not shown), as would be known in the art, which advantageously preserves the polarisation state of the resonator 5.

In this way, the resonator 5 forms a folded cavity wherein a beam can oscillate between the reflective coated end mirror 10b and the partially reflective output coupler 10a via the retroreflector 15.

The folded cavity advantageously comprises an even number of arms or paths. In this particular case, the cavity can be thought of as comprising two arms or paths 50a, 50b through which the oscillating beam travels, a first arm or path 50a being between the partially reflective output coupler 10a and the retroreflector 15 and the second leg or path being between the retroreflector 15 and the reflective end mirror 10b.

The telescope 20 is provided in the beam path between the gain medium 25 and the output coupler 10a and also in the beam path between the retroreflector 15 and the end mirror 10b. In this example, the telescope 20 comprises a pair of optical elements 55a, 55b, in this case in the form of a pair of spatially separated lenses (equivalent to an eyepiece lens and an objective lens). The telescope 20 is arranged along the beam paths of the resonator 5, i.e. such that the two optical elements 55a, 55b are spatially separated in a direction parallel with the separation of the integrated output coupler 10a / end mirror 10b and the retro reflector 15, e.g. such that the optical axis of the telescope 20 and at least the symmetry axis 40 of the retroreflector 15 substantially coincide. In the embodiments shown in Figures 1 and 2, the telescope 20 is configured to expand the beam (i.e. increase the beam width or waist) as it passes through the telescope 20 in a left to right direction through the first optical element before the second optical element (i.e. away from the output coupler 10a or the end mirror 10b and towards the gain medium 25 and retroreflector 15) and to shrink the beam (i.e. decrease the beam width) as it passes in a right to left direction through the second optical element before the first optical element (i.e. in a direction away from the gain medium 25 and retroreflector 15 towards the end mirror 10b or output coupler 10a).

The telescope 20 is configured to act as a common telescope such that both the first and second paths or arms 50a, 50b pass through the telescope 20, i.e. during each traverse by the beam of the resonator 5 cavity between the output coupler 10a and the end mirror 10b, the beam passes through the telescope 20 twice, one of the passages through the telescope 20 being in a first or forward direction, i.e. passing through the first optical element 55a (e.g. the eyepiece) before the second optical element 55b (e.g. the objective lens) and the other of the passages through the telescope 20 passing in a second or reverse direction, i.e. passing through the second optical element 55b before the first optical element 55a. In this way, during each traverse by the beam of the resonator 5 cavity, the beam passes through the telescope 20 twice so as to be both expanded and shrunk.

In particular, the telescope 20 is configured to always expand the beam before it passes through the gain medium 25 and the reduce it before being reflected from the end mirror 10b or output coupler 10a. Importantly, the telescope 20 expands the size of the fundamental mode through the gain medium 25, thereby decreasing the effect of other modes. This leads to a greatly improved beam quality.

The optical elements 55a, 55b of the telescope 20 are mounted on a spindle 60 so as to be selectively movable together and apart using a focus adjust mechanism 65 and a selective locking or clamping mechanism (not shown). Various means for implementing this focus adjust mechanism 65 would be apparent to a person skilled in the art. In the present embodiment, the beam does not pass along the optical axis of the telescope 20 on either arm 50a, 50b. Therefore, the spindle 60 may extend along the optical axes of the first and second optical elements 55a, 55b such that they are mounted on-axis. On axis mounts are simple and naturally balanced, making it easier to achieve low vibration loads and facilitate the incorporation of a focus adjust mechanism.

Furthermore, as the optical elements 55a, 55b are only used in one plane in the present invention, the periphery of at least one and preferably each optical element 55a, 55b may be trimmed such that their shape more closely resembles a rectangular cross section, thereby removing superfluous weight and volume from the resonator 5.

Advantageously, the telescope 20 is athermalised in order to minimise adverse effects due to focus stability of the telescope 20. Various suitable techniques for athermalising optics could be utilised for this purpose. For example, the first optical element 55a of the telescope 20 may have a rate of change of index of refraction with temperature that is positive (i.e. a +ve dn/dT) and the second optical element 55b of the telescope 20 may have a rate of change of index of refraction with temperature that is negative.(i.e. a -ve dn/dT). Preferably the magnitude of the rate of change of index of refraction with temperature of each optical element 55a, 55b is selected such that the net change in the optical properties of the telescope 20 as a whole with temperature is minimised or zero, at least over the operational range of the resonator 5.

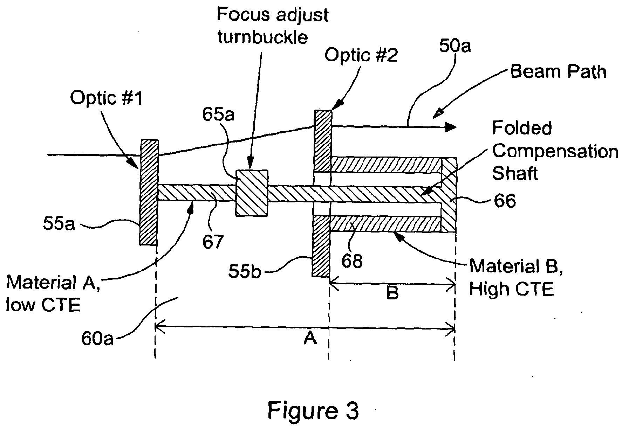

An alternative or additional example of an athermalisation technique is to mount either optical element 55a or 55b on a re-entrant mount or spindle 60a, of materials and geometry chosen such that the effective thermal expansion of the separation is either sufficiently low as to not affect focus, or chosen to explicitly cancel the thermal drift of the lenses optical behaviour. An example of a re-entrant mount is described in "Introduction to opto-mechanical design" Daniel Vukobratovich, National Optical Astronomy Observatories, 950 Cherry Ave Tucson AZ 85726-6732 in which the re-entrant mount is described as a "bi-metallic compensator", although it will be appreciated that the re-entrant mount need not be metallic. In general, a re-entrant mount 60a has the 2^{nd} optical element 55b connected to the first optical element 55a by means of a folded compensation shaft 66, as shown in Figure 3. It can be seen from this that the first 55a optical element is mounted on a mount member 67 having a low coefficient of thermal expansion. The mount member 67 also comprises focus adjustment means 65a for varying the separation of the first and second optical elements 55a, 55b. The mount member 67 extends from the first optical element 55a through the second optical element 55b where it is mounted to far side of the second optical element 55b via a connection member 68 whose coefficient of thermal expansion is high relative to that of the mount member 67. The distance between the two optical element's 55a, 55b equivalent to thermal expansion can be very accurately chosen for two arbitrary values of material coefficient of thermal expansion by varying the length of the connection member 68.

It will be appreciated that other athermalisation techniques would be apparent to a person skilled in the art, which may be applied in addition or alternatively to the techniques described above. Optionally, the length of the telescope 20 may be increased and/or the magnification of the telescope 20 decreased and or the nominal separation of the two arms decreased in order to make the requirement for athermalisation less demanding.

The gain medium 25 is provided in the form of a rod extending along the beam path on one leg or path 50a of the resonator, for example, in the beam path 50a between the output coupler 10a and the retroreflector 15 between the retroreflector 15 and the telescope 20. In the specific examples shown in Figures 1 and 2, the gain medium 25 is provided in the first leg 50a, although the invention is not limited to such. The gain medium 25 may comprise any suitable laser gain material known in the art.

As shown in detail in Figure 2, the gain medium 25 is provided in an end pumped configuration, wherein it is pumped through an end of the rod of gain medium 25. However, it will be appreciated that the rod of gain medium 25 may equally be pumped through the other end or indeed pumped through both ends. Alternatively, the rod of gain medium 25 is optionally side pumped. In the embodiment shown in Figure 2, the rod of gain medium 25 is end pumped by using a polariser beam splitter 70, which allows pumping radiation to be provided from a pump source 75 to the end of the gain medium 25 yet still allow the beam to oscillate and resonate within the resonator 5. Advantageously, the polariser beam splitter 70 is optionally configured to allow q-switched operation of the resonator. Furthermore, combining all the warm components such as the pump 75 and/or gain medium 25 in the same module may allow for easier thermal management of the resonator 5.

In the embodiment shown in Figure 2, a separate electro-optic q-switch 80 is also provided, in this case in the second leg 50b of the resonator 5. Advantageously, the q-switch 80 is configured to have a nominal λ/4 phase shift and produces a further λ/4 phase shift when engaged. In this way, a lower driving voltage is required to activate the q-switch 80.

Resonator adjustment means, for example in the form of a pair of rotating wedges 85a, 85b, is provided in the beam path, in this case in the second leg 50b between the telescope 20 and the retroreflector 15 in the beam path between the end mirror 10b and the retroreflector 15. At least one of the wedges 85a, 85b is configured to be rotatable relative to the other wedge 85a, 85b. In this way, the resonator alignment can be fine-tuned, for example to compensate for residual focus adjust on the telescope 20 and/or for any residual wedges on components due to manufacturing tolerances.

The above arrangement results in a highly resilient resonator.

If the telescope 20 was provided only in one arm 50a or 50b of the resonator 5 and the mirror substrate 30 moves with respect to the telescope 20, then this would produce a bore-sight shift to the beam, which could destabilise the resonator 5. However, in the common telescope configurations of Figure 1 and Figure 2, the retroreflector 15 reflects the beam at the same angle as the incident beam and the boresight shift induced when the beam travels through the telescope 20 in the forward or first direction is exactly reversed as the beam travels back through the telescope 20 in the second or reverse direction.

In another example, in an apparatus having a telescope only in one leg of the resonator, if one of the telescope lenses 55a, 55b moves relative to the other, i.e. one optical element 55a, 55b of the telescope 20 is decentred, the result would be to create a boresight shift in the beam. However, similarly to the above, since the retroreflector 15 reflects the reflected beam at the same angle as the incident beam, the boresight shift is exactly reversed when the beam passes back through the telescope 20 in the reverse direction.

It will be appreciated that a similar self-correction effect would occur when the yaw of one of the optical elements 55a, 55b of the telescope 20 varies with respect to the other.

The simplicity of the common telescope design enables a reduction in the complexity of the manufacturing processes and ensures that both legs 55a, 55b are optically matched. Any weight penalty due to the additional optics is limited as the folded cavity design is inherently compact. Furthermore, since the beam quality is good as a result of the telescope 20 arrangement, the resonator 5 may be made shorter, in order to reduce weight and volume at the expense of the beam quality. Furthermore, since the present arrangement has a good resilience to misalignment, then the present invention may employ more compact telescopes, again saving weight.

The resilience of the above geometry was investigated. For the purposes of comparison a comparative system that comprises a telescope only in one arm of the resonator was compared to a corresponding common telescope configuration wherein the telescope 20 acts on both arms 50a, 50b.

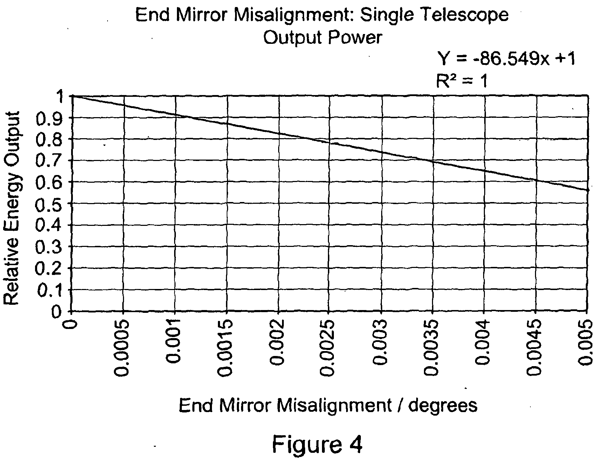

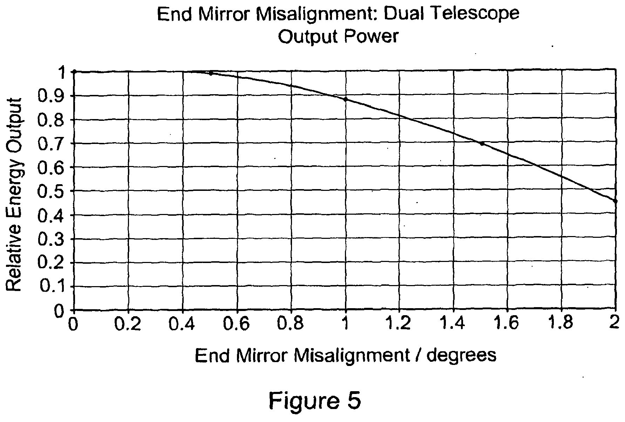

For this specific comparison, if the output coupler 10a / end mirror 10b is misaligned (rotated relative to the optical axis of the telescope), then it can be seen that for the comparative system, only a 0.000116 degree (2.0µrad) misalignment is required in order to decrease the output energy by 1%, as shown in Figure 4. In contrast, for the common telescope arrangement, a 0.4degree (7000µrad) misalignment is needed before the energy output drops by 1%, as shown in Figure 5.

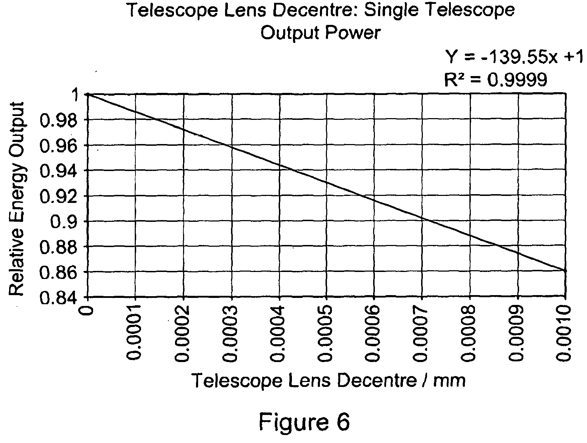

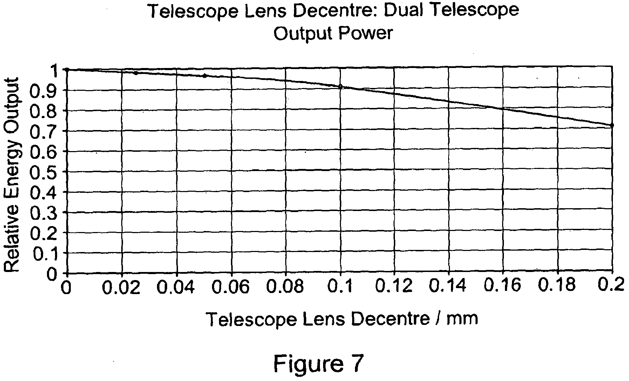

For a decentring of one of the lenses 55a, 55b of the telescope 20, then the drops in output power of the resonator 5 in the cases of the comparative system and the common telescope configuration for this specific comparison are shown in Figures 6 and 7 respectively. From this, it can be seen that for the comparative system, a decentring of only 0.072 microns results in a 1% drop in energy, whereas the common telescope configuration can be decentred by 25microns before the energy drops by 1%.

Therefore, the above resonator 5 of the present invention comprising a retroreflector 15 in conjunction with a common telescope 20 that spans two legs of the beam path of a folded cavity design may result in a much more robust resonator 5.

The improvement in beam quality achieved by the above resonator 5 was also investigated using theoretical modelling. In this case, a comparative resonator in the form of a classic 200mm long resonator that comprises a telescope having 2.5x magnification and being 40mm long was modelled for comparative purposes. The comparative resonator was unfolded and had 2 opposed plane parallel mirrors.

The common telescope configuration was modelled using a mirror immediately adjacent to an expanding telescope, separated from a reducing telescope by 200-40-40=120mm, immediately followed by the 2^{nd} plane mirror.

Both the comparative and the common telescope models were slightly defocussed to provide a realistic stability margin. The amount of defocus was set for each resonator such that the stability margin was 0.99 (with 1 being the limit). The amount of defocus for each model was found iteratively before the analysis was carried out.

For the comparison model and the model representative of the common telescope arrangement, using the same scope magnification and operating at the same stability point, the radius of the fundamental mode at the beam waist was found to be 10.84% greater for the common telescope arrangement than for the comparison model. This translates to a 22.8% improvement in area and thus energy held by the fundamental mode.

In general, the resonator configuration described above can provide at least one and generally each of the following advantages:
i) Since the telescope 20 is used twice per traverse by the beam of the cavity of the resonator 5 of the present invention, the improvement in beam quality is increased over the case in which the telescope 20 is provided only in one arm or leg 55a, 55b of the resonator 5.
ii) The design of the present invention is inherently resilient to misalignment of the end reflector substrate, misalignment of the retroreflector 15, decentre of the retro reflector 15, misalignment of the telescope 20, decentre of the telescope 20, decentring of one of the optical elements 55a, 55b of the telescope 20, and yaw of one of the optical elements 55a, 55b of the telescope 20.
iii) The high resilience of the resonator 5 of the present invention allows higher telescope powers to be used to achieve an increase in beam quality for a given volume.
iv) The above resonator 5 of the present invention gives the designer lee-way to trade the higher beam quality resulting from the telescope 20 for stronger resilience of telescope focus.
v) Since the solid angle that both mirrors 10a, 10b present to the gain medium is reduced, there is a corresponding reduction in amplified spontaneous emission (ASE) losses.
vi) The resonator 5 of the present invention is simple and may use spherical optics, which reduces manufacturing cost and complexity.

It will be appreciated that although an advantageous example of the invention is described above, variations to the above example are contemplated.

For example, it will appreciated that the present invention is operable with a wide variety of suitable gain medium materials, pumping arrangements, and resonator dimensions, as known in the art, with varying degrees of efficacy, and is not limited to any particular configuration.

It will be appreciated that the most generic implementation of the present invention would be as a common telescope fitted between an even number, such as two, arms of a folded resonator. It will be appreciated that the end reflectors could comprise any suitable means known in the art, such as crossed porros, corner cubes, mirrors, or the like. The output coupler could comprise any suitable means known in the art, such as polarisation coupled, partially reflective, and the like.

Although the specific example described above uses an on-axis spindle mount, it will be appreciated that other suitable mounts may be used, such as a hybrid mount, where the objective lens of the telescope is mounted through its horizontal axis, and the eyepiece lens of the telescope is mounted round its periphery, i.e. the shaft would be hollow around the eyepiece, with holes to allow the beams to pass. This advantageously allows the eyepiece lens of the telescope to come as close as possible to the optical axis to maximise a reduction in focus sensitivity.

As shown in Figure 2, the gain medium 25 comprises a rod. However, it will be appreciated that the rod of gain medium 25 may equally be a slab or chamber housing a non-solid state gain medium.

The resonator described above in the detailed example is a q-switched resonator. However, it will be appreciated that the resonator may alternately be configured, operate or be operable as a continuous wave device, a modelocked laser, a long pulsed laser, or the like.

It will be appreciated that a laser resonator as described above may be used in a variety of potential laser based applications and apparatus such as but not limited to a sensor, a laser designator, a rangefinder, a laser pump source and/or the like.

Therefore, it will be appreciated that the above specific description is provided by way of example only and that the scope of the invention is defined by the claims.

## Claims

1. A laser resonator (5) comprising:
an output coupler (10a);
an end reflector (10b);
a retroreflector (15);
a telescope (20);
a gain medium (25); **characterized in that**
the telescope (20) is a common telescope, wherein the common telescope is a telescope shared by at least two arms or paths (50a, 50b) of the resonator, the common telescope being provided in beam paths (50a, 50b) between the retro reflector (15) and both the end reflector (10b) and the output coupler (10a).

2. The laser resonator (5) as claimed in claim 1, wherein the retroreflector (15) is arranged such that a beam is not received or reflected along an axis of symmetry (40) of the retroreflector (15).

3. The laser resonator (5) as claimed in claim 1 or claim 2, wherein the telescope (20) is shared by an even number of arms or beam paths (50a, 50b) of the resonator (5) per round trip.

4. The laser resonator (5) as claimed in any preceding claim, wherein:
the resonator (5) is configured such that a beam or radiation reflected from the output coupler (10a) passes through the telescope (20) before being reflected by the retroreflector (15) to the end reflector (10b) via the telescope (20); and/or
the gain medium (25) is provided on the beam path (50a) between the retroreflector (15) and the telescope (20); and/or
the telescope (20) is configured to expand the beam going through the gain medium (25).

5. The laser resonator (5) according to any preceding claim, wherein the output coupler (10a) and the end reflector (10b) are integrated, and are optionally provided on a common substrate (30).

6. The laser resonator (5) according to any preceding claim, wherein:
the resonator-telescope geometry is optimised for low boresight sensitivity to telescope focus; and/or
the telescope (20) comprises focus adjustment means (65); and/or
the telescope (20) is defocused or is configured to be defocused.

7. The laser resonator (5) according to any preceding claim, wherein the telescope (20) is configured to introduce convergence or local divergence within the cavity.

8. The laser resonator (5) according to any preceding claim, wherein the telescope (20) focus is actively or passively athermalised; and optionally comprises a re-entrant mount (60a).

9. The laser resonator (5) according to any preceding claim, wherein:
the telescope (20) is configured to exhibit low off-axis optical aberrations; or
the telescope (20) is configured to have off axis aberrations, which may optionally be configured to achieve round trip stability.

10. The laser resonator (5) according to any preceding claim, wherein:
the retroreflector (15) comprises a corner cube retroreflector; and/or
the retroreflector (15) is arranged to be off-axis; and/or
an axis of symmetry (40) of the retroreflector (15) is collinear with the optical axis of the common telescope (20).

11. The laser resonator (5) according to any preceding claim, wherein the resonator (5) comprises or incorporates an alignment adjustment element; the alignment adjustment element optionally comprising a fixed optical wedge (45) or a paired set of rotating wedges (85a, 85b).

12. The laser resonator (5) according to any preceding claim, wherein:
the laser resonator (5) comprises a radiation source (75) configured to end pump the gain medium via a polariser beam splitter (70), wherein the polarised beam splitter (70)is operable as a Q-switch; and/or
the laser resonator (5) is configured to support and/or create one or more stable resonant modes.

13. A laser comprising the laser resonator (5) according to any of claims 1 to 12.

14. An apparatus comprising a laser according to claim 13.

15. A method of operating a laser resonator (5) according to any of claims 1 to 12 and/or a laser according to claim 13 and/or an apparatus according to claim 14.

## Patentansprüche

1. Laserresonator (5), der aufweist:
einen Ausgangskoppler (10a);
einen Endreflektor (10b),
einen Retroreflektor (15);
ein Teleskop (20);
ein Verstärkungsmedium (25);
**dadurch gekennzeichnet, dass**
das Teleskop (20) ein gemeinsames Teleskop ist, wobei das gemeinsame Teleskop ein Teleskop ist, das mindestens zwei Arme oder Strahlengänge (50a, 50b) des Resonators gemeinsam nutzt, wobei das gemeinsame Teleskop in Strahlengängen (50a, 50b) zwischen dem Retroreflektor (15) und sowohl dem Endreflektor (10b) als auch dem Ausgangskoppler (10a) bereitgestellt wird.

2. Laserresonator (5) nach Anspruch 1, wobei der Retroreflektor (15) so angeordnet ist, dass ein Strahl nicht längs einer Symmetrieachse (40) des Retroreflektors (15) empfangen oder reflektiert wird.

3. Laserresonator (5) nach Anspruch 1 oder Anspruch 2, bei dem das Teleskop (20) von einer geraden Anzahl von Armen oder Strahlengängen (50a, 50b) des Resonators (5) pro Umlauf gemeinsam genutzt wird.

4. Laserresonator (5) nach einem der vorhergehenden Ansprüche, bei dem:
der Resonator (5) so ausgebildet ist, dass ein Strahl oder eine Strahlung, der vom Ausgangskoppler (10a) reflektiert wird, durch das Teleskop (20) gelangt, bevor er vom Retroreflektor (15) zum Endreflektor (10b) über das Teleskop (20) reflektiert wird; und/oder
das Verstärkungsmedium (25) im Strahlengang (50a) zwischen dem Retroreflektor (15) und dem Teleskop (20) bereitgestellt wird; und/oder
das Teleskop (20) ausgebildet ist, um den Strahl zu expandieren, der durch das Verstärkungsmedium (25) gelangt.

5. Laserresonator (5) nach einem der vorhergehenden Ansprüche, bei dem der Ausgangskoppler (10a) und der Endreflektor (10b) integriert sind und wahlweise auf einem gemeinsamen Substrat (30) bereitgestellt werden.

6. Laserresonator (5) nach einem der vorhergehenden Ansprüche, bei dem:
die Resonator-Teleskop-Geometrie für eine geringe Sichtlinie-Empfindlichkeit zum Teleskopfokus optimiert ist; und/oder
das Teleskop (20) ein Fokuseinstellmittel (65) aufweist; und/oder
das Teleskop (20) defokussiert ist oder so ausgebildet ist, dass es defokussiert wird.

7. Laserresonator (5) nach einem der vorhergehenden Ansprüche, bei dem das Teleskop (20) ausgebildet ist, um eine Konvergenz oder lokale Divergenz innerhalb des Hohlraumes einzuführen.

8. Laserresonator (5) nach einem der vorhergehenden Ansprüche, bei dem der Fokus des Teleskops (20) aktiv oder passiv athermalisiert wird; und der wahlweise eine einspringende Halterung (60a) aufweist.

9. Laserresonator (5) nach einem der vorhergehenden Ansprüche, bei dem:
das Teleskop (20) ausgebildet ist, um geringe außeraxiale optische Aberrationen zu zeigen; oder
das Teleskop (20) ausgebildet ist, um außeraxiale Aberrationen aufzuweisen, die wahlweise konfiguriert werden können, um eine Stabilität des Umlaufs zu erreichen.

10. Laserresonator (5) nach einem der vorhergehenden Ansprüche, bei dem:
der Retroreflektor (15) einen Eckwürfel-Retroreflektor aufweist; und/oder der Retroreflektor (15) so angeordnet ist, dass er außeraxial ist; und/oder
eine Symmetrieachse (40) des Retroreflektors (15) kollinear mit der optischen Achse des gemeinsamen Teleskops (20) ist.

11. Laserresonator (5) nach einem der vorhergehenden Ansprüche, wobei der Resonator (5) ein Einstellelement für die Ausrichtung aufweist oder enthält; das Einstellelement für die Ausrichtung wahlweise einen festen Graukeil (45) oder einen paarweise angeordneten Satz von sich drehenden Keilen (85a, 85b) aufweist.

12. Laserresonator (5) nach einem der vorhergehenden Ansprüche, wobei:
der Laserresonator (5) eine Strahlungsquelle (75) aufweist, die ausgebildet ist, um das Verstärkungsmedium über einen Polarisator-Strahlenteiler (70) endzupumpen, wobei der polarisierte Strahlenteiler (70) als ein Q-Schalter betätigbar ist; und/oder
der Laserresonator (5) ausgebildet ist, um eine oder mehrere stabile Resonanzmodi zu unterstützen und/oder zu erzeugen.

13. Laser, der den Laserresonator (5) nach einem der Ansprüche 1 bis 12 aufweist:

14. Vorrichtung, die einen Laser nach Anspruch 13 aufweist.

15. Verfahren zum Betätigen eines Laserresonators (5) nach einem der Ansprüche 1 bis 12 und/oder eines Lasers nach Anspruch 13 und/oder einer Vorrichtung nach Anspruch 14.

## Revendications

1. Résonateur laser (5) comprenant :
un coupleur de sortie (10a) ;
un réflecteur terminal (10b) ;
un rétroréflecteur (15) ;
un télescope (20) ;
un milieu de gain (25) ;
**caractérisé en ce que** le télescope (20) est un télescope commun, ledit télescope commun étant un télescope partagé par au moins deux bras ou trajectoires (50a, 50b) du résonateur, le télescope commun étant prévu dans les trajectoires de faisceau (50a, 50b) situées entre le rétroréflecteur (15) et chacun des éléments que forment le réflecteur terminal (10b) et coupleur de sortie (10a).

2. Résonateur laser (5) selon la revendication 1, dans lequel le rétroréflecteur (15) est agencé de manière qu'un faisceau ne soit pas reçu ni réfléchi le long d'un axe de symétrie (40) du rétroréflecteur (15).

3. Résonateur laser (5) selon la revendication 1 ou la revendication 2, dans lequel le télescope (20) est partagé par un nombre pair de bras ou trajectoires de faisceau (50a, 50b) du résonateur (5) par aller-retour.

4. Résonateur laser (5) selon l'une quelconque des revendications précédentes, dans lequel :
le résonateur (5) est configuré de manière qu'un faisceau ou rayonnement réfléchi par le coupleur de sortie (10a) traverse le télescope (20) avant d'être réfléchi par le rétroréflecteur (15) vers le réflecteur terminal (10b) par le biais du télescope (20) ; et/ou
le milieu de gain (25) est prévu sur la trajectoire de faisceau (50a) entre le rétroréflecteur (15) et le télescope (20) ; et/ou
le télescope (20) est configuré pour élargir le faisceau traversant le milieu de gain (25).

5. Résonateur laser (5) selon l'une quelconque des revendications précédentes, dans lequel le coupleur de sortie (10a) et le réflecteur terminal (10b) sont intégrés, et sont éventuellement prévus sur un substrat commun (30).

6. Résonateur laser (5) selon l'une quelconque des revendications précédentes, dans lequel :
la géométrie entre le résonateur et le télescope est optimisée pour une faible sensibilité de ligne de visée à la focalisation du télescope ; et/ou
le télescope (20) comprend un moyen de réglage de la focalisation (65) ; et/ou
le télescope (20) est défocalisé ou est configuré pour être défocalisé.

7. Résonateur laser (5) selon l'une quelconque des revendications précédentes, dans lequel le télescope (20) est configuré pour introduire une convergence, ou bien une divergence locale, dans la cavité.

8. Résonateur laser (5) selon l'une quelconque des revendications précédentes, dans lequel la focalisation du télescope (20) est activement ou passivement athermalisé, celui-ci comprenant éventuellement une monture rentrante (re-entrant mount) (60a).

9. Résonateur laser (5) selon l'une quelconque des revendications précédentes, dans lequel :
le télescope (20) est configuré pour présenter de faibles aberrations optiques hors axe ; ou
le télescope (20) est configuré pour présenter des aberrations hors axe, qui peuvent éventuellement être configurées pour assurer la stabilité aller-retour.

10. Résonateur laser (5) selon l'une quelconque des revendications précédentes, dans lequel :
le rétroréflecteur (15) comprend un rétro réflecteur à coin de cube ; et/ou
le rétroréflecteur (15) est agencé pour être hors axe ; et/ou
un axe de symétrie (40) du rétroréflecteur (15) est colinéaire à l'axe optique du télescope commun (20).

11. Résonateur laser (5) selon l'une quelconque des revendications précédentes, dans lequel le résonateur (5) comprend ou incorpore un élément de réglage d'alignement ; l'élément de réglage d'alignement comprenant éventuellement un coin optique fixe (45) ou un ensemble jumelé de coins rotatifs (85a, 85b).

12. Résonateur laser (5) selon l'une quelconque des revendications précédentes, dans lequel :
le résonateur laser (5) comprend une source de rayonnement (75) configurée pour effectuer le pompage terminal du milieu de gain par le biais d'un diviseur de faisceau à polarisateur (70), ledit diviseur de faisceau à polarisateur (70) pouvant avoir fonction de commutateur Q ; et/ou
le résonateur laser (5) est configuré pour prendre en charge et/ou créer un ou plusieurs modes résonants stables.

13. Laser comprenant le résonateur laser (5) selon l'une quelconque des revendications 1 à 12.

14. Appareil comprenant un laser selon la revendication 13.

15. Procédé de fonctionnement d'un résonateur laser (5) selon l'une quelconque des revendications 1 à 12 et/ou d'un laser selon la revendication 13 et/ou un appareil selon la revendication 14.
